# DEMANDE DE BREVET EUROPEEN

(11) **EP 1 267 238 A1**
(43) Date de publication de la demande: **18.12.2002**
(21) Numéro de dépôt: 02291497.2
(22) Date de dépôt: 14.06.2002
(51) Int. Cl.: G05B 19/418

(54) **Système de gestion des travaux à façon**

(30) Priorité: 14.06.2001 FR 0107814
(71) Demandeur: Gravindus, 60540 Bornel (FR)
(72) Inventeur: Martin, Bernard, 60510 Bresles (FR)
(74) Mandataire: Debay, Yves

(57) **Abrégé**

La présente invention concerne le traitement et le suivi de travaux « à façon », c'est-à-dire à la demande et plus ou moins sur mesure, par un prestataire de service dont l'activité comprend la réalisation d'objets signalétiques personnalisés ou la personnalisation d'objets par marquage ou découpe, en utilisant des textes, dessins, images, formes ou dimensions définies spécifiquement par le client ou le donneur d'ordres.

Il s'agit d'un système informatique de gestion de travaux à la demande de personnalisation d'objets signalétiques ou réalisation personnalisée d'objets signalétiques, ces travaux étant définis ou paramétrés par un donneur d'ordres. Ce système communique avec un système informatique standard utilisé par le donneur d'ordres. Ces échanges d'informations se font par communication à travers un ou plusieurs réseaux d'échanges de données et sont basés sur des protocoles standards d'échange de données alphanumériques et graphiques, par exemple HTML ou XML.

## Description

La présente invention concerne le traitement et le suivi de travaux « à façon », c'est-à-dire à la demande et plus ou moins sur mesure, par un prestataire de service dont l'activité comprend la réalisation d'objets signalétiques personnalisés ou la personnalisation d'objets, par exemple en utilisant des textes, dessins, images, formes ou dimensions définies spécifiquement par le client ou le donneur d'ordres.

Ce type de travaux comprend en particulier le marquage de panneaux ou lamelles de panneaux, plaques ou étiquettes sur des matières telles que plastique, aluminium, laiton, acier. Il peut s'agir également de réaliser des tampons caoutchoucs de différents types.

Il peut s'agir également de réaliser des panneaux ou lamelles de panneaux, enseignes, banderoles ou inscriptions, par l'utilisation de lettres découpées par exemple dans des matières telles que pvc, aluminium, laiton, vinyles souples, ou à positionner avec un film transfert. Il peut s'agir de personnaliser par marquage ou gravure d'objets utilitaires ou publicitaires, qu'ils soient plans ou en volume. Le contenu de la personnalisation à réaliser comprend le plus souvent des éléments de texte, symboles, dessins ou même images.

Il peut également s'agir de marquage ou travail d'impression personnalisée, tel qu'impression de « travaux de ville », c'est-à-dire par exemple des cartes de visite, menus, invitations, faire-part, publicités, en particulier lors de réalisations en petites séries.

Les procédés utilisés pour réaliser ce marquage sont variés et comprennent par exemple la gravure par outil mécanique, laser ou composé chimique, l'impression offset, typo, l'impression numérique électrostatographique, ou à laser, ou par transfert thermique ou sublimation thermique ; que ce soit en couleur ou noir et blanc.

Les produits de base utilisés pour réaliser ces travaux peuvent être constitués de feuilles souples, de plaques rigides, de produits semi-finis voire d'objets plus complexes, et sont parfois disponibles dans une multiplicité de version, couleurs ou dimensions. Ils peuvent être utilisés dans des formes ou dimensions prédéfinies ou proposer des modifications personnalisées de ces formes ou dimensions dans certaines limites prédéfinies.

Du fait que la réalisation de ce type de travaux peut être spécifique à chaque travail commandé, les objets réalisés et les coûts engagés par le prestataire n'ont de valeur marchande que dans la stricte mesure ou le résultat correspond précisément à la demande du client. Un travail refusé par le client qui l'a commandé constitue une perte sèche dans son intégralité, et ne peut le plus souvent pas être utilisé plus tard, ni pour le même client ni pour un autre. Cet aspect rend particulièrement important la correspondance précise du produit réalisé avec la commande du client, ainsi que le fait de pouvoir établir la provenance d'une erreur lorsqu'il s'en produit une.

Par ailleurs, en particulier lorsqu'il s'agit de travaux où la valeur facturable de chaque commande est relativement faible, l'activité d'un prestataire correspond souvent à un nombre de commandes très important. Chacune de ces commandes doit pourtant être traitée sans erreur, car elles sont toutes différentes et chaque erreur sera remarquée, donc préjudiciable à l'image du prestataire.

Un gain de temps sur chaque commande a donc un effet important sur la rentabilité de l'activité totale, alors que la fiabilité des informations définissant chaque travail doit au contraire s'améliorer.

Lors de la commande d'un travail par un demandeur, il est donc important que les informations définissant ce travail soient communiquées de façon fiable et exacte jusqu'au stade de la fabrication, et même jusqu'à l'ordinateur qui commande la machine de fabrication lorsque celle-ci est numérique.

Or, pour des travaux à la fois fréquents, peu coûteux, mais souvent urgents ou indispensables au bon fonctionnement voire à la conformité légale d'une administration ou d'une entreprise, il est fréquent de passer commande à distance, par téléphone ou télécopie.

Les informations relatives au contenu de la personnalisation, comme les autres paramètres définissant le travail à réaliser, sont donc saisies ou écrites et recopiées plusieurs fois le long de la chaîne de traitement qui va du choix du client jusqu'à la livraison des produits. Or de tels saisies manuelles répétées sont des sources connues d'erreur, que ce soit sous la forme d'erreurs d'inattention, de compréhension, ou de confusions au recopiage entre des caractères se ressemblant, y compris pour des textes dactylographiés et re-saisis par un opérateur humain.

Il est donc avantageux d'utiliser une gestion automatisée des travaux et des informations les définissant, au moins dans la transmission de ces informations entre le client et les différentes étapes de la réalisation de sa commande. De plus, si le client a saisi lui-même ces informations, il est également plus difficile d'imputer au prestataire une erreur qui pourrait survenir malgré tout.

Dans ce domaine, pour faciliter la prise de commande et éviter de stocker des produits de base en matériaux coûteux comme des anneaux en métal précieux, il est connu par le brevet WO 93 20522 d'utiliser un système de communication à distance comprenant un ordinateur situé dans un lieu de vente et doté d'un modem, et relié par le réseau téléphonique à un centre de production qui centralise et réalise les travaux.

Le fait d'utiliser un ordinateur doté d'un logiciel spécifique pose toutefois des problèmes qui limitent l'usage d'un tel système. En effet, l'utilisation d'un logiciel spécifique suppose entre autres, pour le client, de disposer d'une machine compatible avec les versions existantes de ce logiciel, de s'être auparavant spécialement procuré ce logiciel, de l'avoir installé et d'en connaître l'utilisation. Cela correspond en fait au besoin pour le client de se déplacer dans une boutique disposant d'une station informatique spécifiquement configurée et contenant les fichiers correspondants. Ces éléments sont un frein important à la proposition de tels services à tous leurs clients potentiels, que ce soit à l'intérieur des entreprises ou dans le public.

La présente invention a pour objet de pallier tout ou partie des inconvénients de l'art antérieur en proposant un système de prise de commande et de gestion des travaux qui soit accessible à partir d'un quelconque ordinateur ou dispositif interactif capable de se connecter à un réseau informatique standard compatible avec des logiciels de communication ou d'interface répandus. Un réseau de ce type peut être par exemple un réseau d'accès public comme l'Internet ou d'un réseau d'entreprise configuré en intranet, de façon locale (LAN : Local Area Network) ou multi-sites (WAN : Wide Area Network), ou d'une combinaison de différents réseaux offrant le même type de compatibilité.

Ce but est atteint par un système informatique de gestion de travaux à la demande selon la revendication 1.

Des développements supplémentaires de l'invention sont décrits dans les revendications dépendantes.

L'invention, avec ses caractéristiques et avantages, ressortira plus clairement à la lecture de la description faite en référence aux dessins annexés dans lesquels :
- la figure 1 est un schéma illustrant l'architecture du système et de ses liaisons avec l'extérieur selon l'invention dans un mode de réalisation ;
- la figure 2 est un schéma illustrant l'architecture du système et de ses liaisons avec l'extérieur selon l'invention dans un mode de réalisation présentant un autre mode d'accès ;
- la figure 3 est un schéma illustrant l'architecture interne de l'agent d'interface client et de ses liaisons avec le reste du système dans un mode de réalisation.
- la figure 4 représente une fenêtre logicielle interactive affichée, sur le système du donneur d'ordres pour définir un ou plusieurs travaux de réalisation d'étiquettes gravées, par le système selon l'invention dans un mode de réalisation;
- la figure 5 représente une fenêtre logicielle interactive affichée, sur le système du donneur d'ordres pour définir support de dimension personnalisée à utiliser pour un travail de réalisation d'étiquettes gravées, par le système selon l'invention dans un mode de réalisation;
- la figure 6 représente une fenêtre logicielle interactive affichée, sur le système du donneur d'ordres pour définir le texte ou les dessins personnalisant un travail de réalisation d'étiquettes gravées, par le système selon l'invention dans un mode de réalisation.

Dans la description qui suit, il faut comprendre que les modes de réalisation décrits pour les différents moyens ou agents ne le sont qu'à titre d'exemple. Ces modes de réalisation peuvent en particulier être combinés de façons différentes en fonction des choix techniques ou des applications envisagées ; de même les modules ou agents décrits peuvent ne pas être tous présents ou comporter entre eux des liaisons fonctionnelles présentant des combinaisons différentes ; ces mêmes liaisons pouvant également ne pas être toutes présentes ou arrangées ou situées différemment ; sans sortir de l'esprit de l'invention. Par ailleurs, les termes de donneur d'ordres, client, ou demandeur sont utilisés de façon similaire et désignent l'utilisateur (2, 2a, 2b, 2c) du système de gestion de travaux (1) selon l'invention, accédant ou ayant accédé au dit système par interaction avec un module (13) dit d'interface client.

Dans un mode de réalisation, le système selon l'invention comprend un système informatique (1), mono ou multipostes, dit de gestion des travaux, en communication avec un ou plusieurs systèmes de fabrication (4) ou un ou plusieurs autres systèmes (5) dit externes, ou les deux. Ce système de gestion des travaux (1) est accessible à tout donneur d'ordres à travers le réseau Internet ou un réseau de type intranet, par l'utilisation d'un ordinateur d'un type standard et communicant par une succession de couches de protocoles et langages standards.

Cette accessibilité est réalisée par l'utilisation de moyens de communication (11), assurant les communications du système avec les donneurs d'ordre de façon transparente pour celui-ci.

Dans un mode de réalisation, cette communication transparente est réalisée en utilisant les protocoles standards d'échange de données informatiques en vigueur sur le réseau Internet ou sur tout réseau de type intranet, c'est-à-dire compatible avec les protocoles utilisés par l'Internet.

Ces protocoles comprennent alors l'utilisation des protocoles TCP/IP pour le transfert de base des données au niveau des paquets de données. Ils comprennent également des modes de communication, au niveau ordinateurs et applications, de types URL et WWW (World Wide Web) se superposant au protocole TCP/IP pour permettre à n'importe quel poste connecté au réseau Internet d'accéder de façon ergonomique et transparente à n'importe quel serveur situé n'importe où sur ce réseau, par la simple utilisation de l'adresse URL de ce serveur.

Ces protocoles sont supportés par le système d'exploitation d'une grande part des ordinateurs utilisés dans le monde, en particulier les ordinateurs dit personnels disponibles aujourd'hui dans la plupart des bureaux d'entreprises ou administrations et chez un grand nombre de particuliers. Ces systèmes d'exploitation utilisent par exemple des logiciels dit de navigation (Netscape Communicator®, Internet Explorer®, etc.) basés sur des langages standards de communication (HTML, XML, JAVA®), permettant l'utilisation de graphiques en même temps que de textes dans des échanges interactifs de données entre un utilisateur et un serveur.

La communication peut alors s'effectuer à travers le réseau Internet, ou un réseau de type intranet, ou une succession ou combinaison de ces réseaux.

Dans le cas d'une accessibilité par l'Internet, ces moyens de communication (11) du système (1) pourront être tout raccordement d'un type courant. Ainsi, selon l'importance des flux à faire transiter et l'investissement choisi, il est possible d'effectuer ce raccordement par l'intermédiaire d'un Fournisseur d'Accès Internet (« provider » en anglais) par l'intermédiaire d'un modem analogique raccordé au réseau téléphonique, ou d'un modem numérique raccordé au réseau ISDN (Numéris® en France), d'un modem ADSL sur le réseau téléphonique, ou d'un modem numérique sur un réseau de télévision par câble ou satellite en version numérique. Pour des flux plus importants et à un coût plus important, il est possible d'effectuer un raccordement direct à l'une des branches principales du réseau Internet.

Dans le cas d'une accessibilité par un réseau de type intranet, le réseau est géré par les services de l'organisation qui en est propriétaire, et sa configuration est paramétrée pour que son fonctionnement soit compatible avec les logiciels prévus pour le réseau Internet.

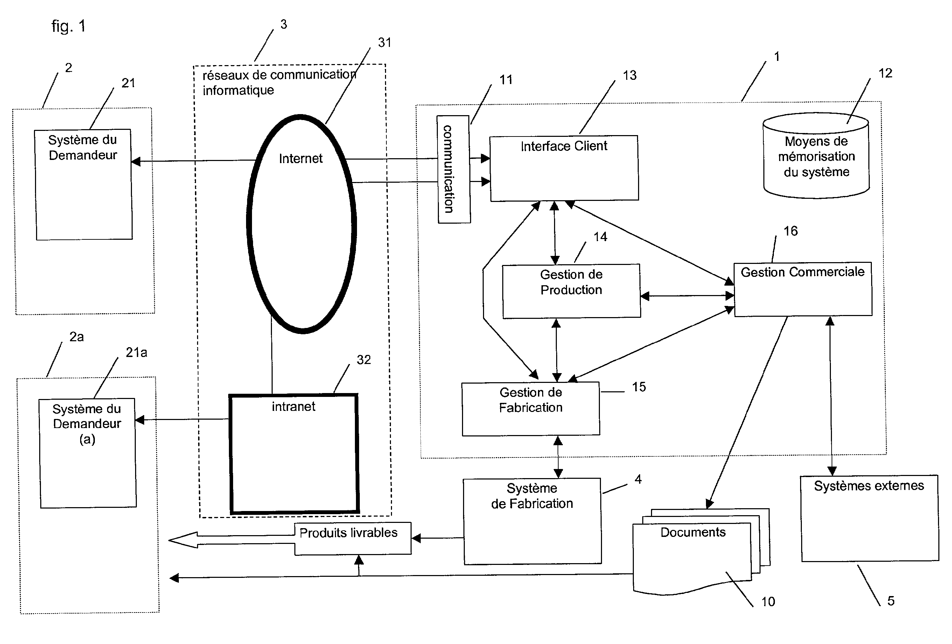

Dans un mode de réalisation représenté en figure 1, le système de gestion de travaux (1) est raccordé directement au réseau Internet. Un demandeur (2) ou donneur d'ordre utilisant un système (21) compatible peut accéder au système de gestion de travaux (1) en se connectant directement au réseau Internet. Un autre demandeur (2a) utilisant un système (21a) compatible peut également accéder au système de gestion de travaux (1) en se connectant au réseau Internet (31) par l'intermédiaire d'un réseau (32) de type intranet, ce réseau intranet pouvant lui-même être constitué de plusieurs parties différentes conservant la compatibilité nécessaire.

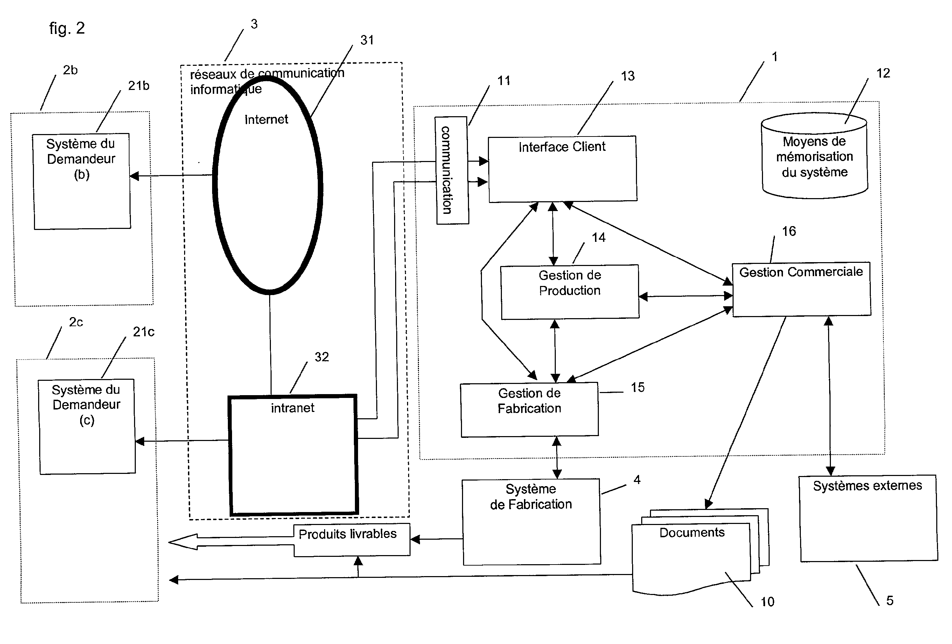

Dans un mode de réalisation représenté en figure 2, le système de gestion de travaux (1) est connecté au réseau Internet (31) par l'intermédiaire d'un réseau (32) de type intranet. Un demandeur (2b) ou donneur d'ordre utilisant un système (21 b) compatible peut accéder au système de gestion de travaux (1) en se connectant directement au réseau Internet. Un autre demandeur (2c) utilisant un système (21c) compatible peut également accéder directement au système de gestion de travaux (1) par l'intermédiaire du dit réseau (32) intranet s'il lui est possible de s'y connecter, par exemple sur le même site par l'intermédiaire d'un réseau local (LAN) configuré en intranet ou depuis un site géographique différent par l'intermédiaire d'un réseau multi-sites (WAN) configuré en intranet.

De tels réseaux étant déjà utilisés couramment, l'accès à un tel système de gestion de travaux (1) muni de tels moyens de communications (11) pourra donc se faire sans installation ni formation particulière par toute personne disposant déjà d'une connexion au réseau Internet, ou à un réseau intranet lui-même connectable au dit système (1).

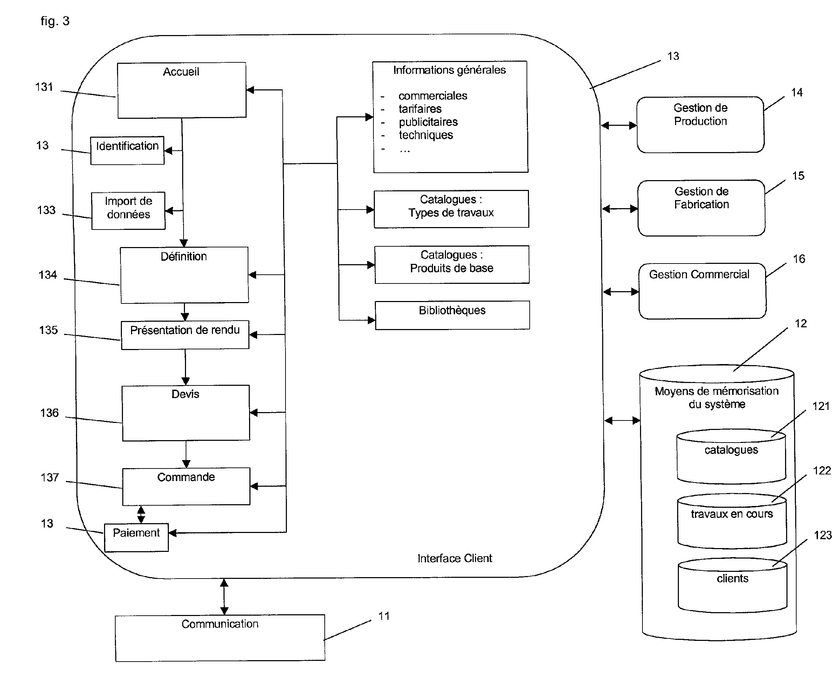

Dans un mode de réalisation représenté en figures 1 et 2, le système de gestion de travaux (1) selon l'invention comprend en particulier des moyens de mémorisation (12) où sont mémorisées des données (121, figure 3) relatives aux types de travaux disponibles et à leurs caractéristiques et contraintes, aux catalogues de produits de base, caractères, symboles ou images utilisables dans ces travaux, des données (122, figure 3) relatives aux différents travaux en cours, ainsi que des données (123, figure 3) relatives aux donneurs d'ordres (2) ou aux partenaires ou systèmes extérieurs (5) interagissant avec le dit système de gestion de travaux (1).

Dans un mode de réalisation, les moyens de communication (11) et l'interface client (13) du système de gestion de travaux (1) peuvent être configurés pour pouvoir communiquer et dialoguer directement avec le système (21, 21a, 21b, 21c) d'un donneur d'ordres(2, 2a, 2b, 2c) et échanger les informations nécessaires à la commande d'un ou plusieurs travaux, même en l'absence d'opérateur humain chez le donneur d'ordres lorsque le dit système (21, 21 a, 21 b, 21 c) du dit donneur d'ordres a été automatisé dans ce sens.

Lors d'un accès au système de gestion de travaux (1) selon l'invention, un donneur d'ordres voulant commander la réalisation d'un ou plusieurs travaux est mis en communication de façon interactive par les moyens de communication (11) avec un module d'Interface Client (13) dont les fonctions sont réalisées par un ou plusieurs agents, et peuvent varier selon les applications.

Le donneur d'ordres peut alors consulter différentes informations et catalogues et définir la nature et les paramètres des travaux qu'il veut faire réaliser. Une fois ces travaux définis, il lui est possible d'obtenir une représentation visuelle du résultat escompté de ces travaux et d'obtenir un devis pour ces travaux suivant une ou plusieurs variantes des dits travaux. Lorsque le devis lui convient, il peut valider celui-ci pour le transformer en commande ferme, et éventuellement effectuer un paiement en ligne. Dans ce même module, un ou plusieurs agents comportent la possibilité de lire, effacer, modifier, ou mémoriser des données dans les moyens de mémorisation (12), ou une combinaison de ces actions.

Dans un mode de réalisation, les informations définissant le travail commandé sont alors transmises à un module de Gestion de Production (14) dont les fonctions sont réalisées par un ou plusieurs agents, et qui va en intégrer la réalisation dans le planning de production du prestataire, et en ordonner la fabrication, de façon automatique ou en interaction avec un ou plusieurs opérateurs humains. Dans ce même module, un ou plusieurs agents comportent la possibilité de lire, effacer, modifier, ou mémoriser des données dans les moyens de mémorisation (12), ou une combinaison de ces actions.

Dans un mode de réalisation, les informations définissant le travail à réaliser vont être transmises pour cela à un module de Gestion de Fabrication (15), dont les fonctions sont réalisées par un ou plusieurs agents. Ces informations vont alors être vérifiées en fonction des contraintes matérielles ou logicielles des machines devant en assurer la réalisation, puis converties en tout ou partie, lorsque c'est possible, sous une forme pouvant être directement transmise à ces mêmes machines sans resaisie par un opérateur humain. Dans ce même module, un ou plusieurs agents comportent la possibilité de lire, effacer, modifier, ou mémoriser des données dans les moyens de mémorisation (12), ou une combinaison de ces actions.

Dans un mode de réalisation, les informations définissant le travail commandé vont être transmises à un module de Gestion Commerciale (16), dont les fonctions sont réalisées par un ou plusieurs agents. Les documents (10) relatifs au travail réalisé, comme par exemple des factures, bons de livraison, commandes d'approvisionnement, peuvent être produits et les informations correspondantes au travail réalisé être mémorisées dans les moyens de mémorisation du système (1), ou être transmises à un autre système (5) comme un système de comptabilité. Dans ce même module, un ou plusieurs agents comportent la possibilité de lire, effacer, modifier, ou mémoriser des données dans les moyens de mémorisation (12), ou une combinaison de ces actions.

Dans un mode de réalisation, le système de gestion de travaux (1) peut interagir avec d'autres systèmes (5) réalisant des fonctions complémentaires ou supplémentaires, éventuellement mis en oeuvre par des organisations extérieures au prestataire. Ces organisations peuvent être des prestataires de service travaillant en sous-traitance, des fournisseurs de service en comptabilité ou audit, des filiales ou enseignes de franchise, des entreprises de livraison, des fournisseurs de produits de base, supports ou consommables, des administrations, ou tout autre interlocuteur de l'organisation mettant en oeuvre le système de gestion de travaux (1).

Selon les applications, le système de gestion de travaux (1) pourra comprendre un module d'interface client et éventuellement un ou plusieurs des modules décrits ci-dessus. Chaque module présente des fonctions réalisées par un ou plusieurs agents.

Dans un but d'illustration et à titre d'exemple, on présentera ci-dessous une liste d'agents pouvant être présents dans le système de gestion de travaux (1) et interagir entre eux ou avec les éléments matériels et moyens présents dans le dit système (1). Ces agents peuvent interagir avec tout autre élément du système comme les moyens de mémorisation (12) ou avec des opérateurs humains chargés du suivi ou de la gestion du dit système (1).

A chaque étape du fonctionnement d'un agent où cet agent est amené à présenter au donneur d'ordres une liste de choix possibles, le dit agent peut comporter la faculté d'effectuer une sélection parmi les données dont il dispose pour construire la dite liste de choix en fonction des résultats d'un ou plusieurs choix précédent obtenus lors d'une ou plusieurs interactions précédentes, ou en fonction de données mémorisées, ou d'une combinaison de ces éléments. Le dit agent pourra également présenter une liste complète de choix dont certaines parties seront distinguées, par exemple visuellement, en fonction des mêmes critères.

Le dit agent pourra par exemple ne présenter au donneur d'ordres que les produits de base utilisables avec un type de travail précédemment choisi, ou ne présenter en caractères soulignés que les dimensions ou couleurs disponibles pour un produit de base précédemment choisi.

Dans un mode de réalisation, le module d'Interface Client comprend un ou plusieurs agents réalisant au moins une des fonctions d'accueil ou d'identification du donneur d'ordres ou demandeur ou client, ou présentation au demandeur des types de travaux réalisables et d'informations relatives aux produits de base ou caractères ou symboles utilisables pour la réalisation de ces travaux, ou une combinaison de ces fonctions.

Ces agents peuvent comporter en particulier la réalisation des fonctions de:
- Accueil du demandeur ;
   - connexion et vérification des éléments de compatibilité avec le système du demandeur ;
   - accueil du demandeur, présentation des possibilités du système de gestion de travaux (1);
   - navigation dans le système de gestion de travaux (1) par l'exécution des commandes d'interaction du demandeur ;
   - explication au demandeur du fonctionnement du système de gestion de travaux (1) ou aide à l'utilisation (par exemple contextuelle ou interactive) ;
   - présentation au demandeur d'informations techniques relatives au système de gestion de travaux (1) ou aux métiers et travaux disponibles par le dit système ou en dehors ;
   - présentation au demandeur d'informations légales relatives aux différentes normes à respecter, par exemple en matière de sécurité, et en rapport avec les produits ou travaux disponibles ;
   - présentation au demandeur d'informations commerciales permanentes, temporaires, ou personnalisées ;
   - présentation au demandeur d'informations tarifaires générales ou personnalisées pour le donneur d'ordres ;
   - présentation au demandeur d'informations publicitaires générales ou personnalisées pour le donneur d'ordres ;
   - demande par le demandeur de tarifs spécifiques en fonction de critères particuliers et mémorisation de ces critères ;
   - suivi par le demandeur des commandes en cours, obtention d'information sur l'état de traitement d'une commande, ou modification éventuelle des paramètres définissant une commande ou un travail en cours ;
   - demande au client d'informations complémentaires sur une commande précédemment validée ;
   - suivi par le demandeur des livraisons effectuées avec les noms des correspondants ;
   - suivi par le demandeur de ses règlements ;
   - gestion par le demandeur de son ou ses comptes auprès du prestataire et information comptable ;
   - mémorisation de parties de sessions interactives (résultat de définition de travaux ou pièces, résultat de calcul de devis) ou réutilisation de telles parties mémorisées précédemment ;
- Identification du demandeur ;
   - par mot de passe ;
   - par comparaison de clés ou traitements cryptographiques ;
   - par interaction avec une carte à puce ou un moyen électronique d'identification sécurisée ;
- Présentation au demandeur des types de travaux disponibles, et sélection ou définition d'un type de travail par le demandeur ;
   - proposition de gravure sur plaque ;
   - proposition de gravure sur objet en volume ;
   - proposition de gravure de tampon caoutchouc ;
   - proposition de découpe de plaques ;
   - proposition de découpe de feuilles, plastiques ou autres ;
   - proposition de marquage d'objet (sérigraphie, etc.) ;
   - proposition d'impression (typo, offset, laser, transfert thermique, sublimation thermique, jet d'encre, etc.) ;
- Présentation au demandeur des produits de base disponibles, et sélection ou définition d'un produit de base par le demandeur ;
   - présentation de produits standards disponibles pour personnalisation ou associés à d'autres produits ou travaux (fixations, poteaux, etc.) ;
   - présentation des types de supports disponibles (plaques, feuilles, films, etc.) ;
   - présentation des types de produits ou supports semi-finis disponibles ;
   - présentation des matériaux disponibles (métaux, papiers, cartons, films, plastiques souples ou rigides, caoutchouc, adhésifs, tampons, tissus, etc.)pour les produits de base ;
   - présentation des dimensions et couleurs disponibles pour les produits de base ;
   - présentation de caractéristiques spéciales (adhésif, film transfert, etc.) disponibles ;
- Présentation au demandeur des symboles, caractères ou images ou modèles prédéfinis disponibles, et sélection ou définition d'un ou plusieurs symboles, caractères, images ou modèles prédéfinis par le demandeur ;
   - présentation des polices de caractères disponibles ;
   - présentation des bibliothèque de symboles disponibles ;
   - présentation de modèles et suggestions prédéfinis ;
   - présentation des bibliothèques de dessins ou images prédéfinis ;
   - présentation des dimensions et couleurs de personnalisation disponibles ;
- Importation ou exportation de données ;
   - téléchargement bidirectionnel de définitions ou devis existants ;
   - téléchargement bidirectionnel de fichiers textes ou graphiques ;
   - utilisation de programmes de filtres de conversion de formats textes ou graphiques ;
- Définition du travail à réaliser ;
   - sélection ou définition par le demandeur de la nature d'un travail ;
   - sélection ou définition par le demandeur de différentes options d'exécution d'un travail ;
   - produits de base à utiliser pour un travail ;
   - sélection ou définition par le demandeur des textes ou images personnalisés et des paramètres qui leurs sont relatifs (taille, profondeur, police, résolution, etc.) ;
   - sélection ou définition par le demandeur de quantités d'exemplaires à réaliser ;
   - sélection ou définition par le demandeur des délais de fabrication ou d'approvisionnement ;
   - sélection ou définition par le demandeur de paramètres complémentaires du travail à réaliser (livraison, points particuliers, etc.) ;
   - production de documents pour le demandeur présentant les résultats de l'interaction avec le système ;
   - mémorisation de la définition d'un travail ou réutilisation d'une telle définition mémorisée précédemment (localement ou à distance) ;
- Présentation du rendu d'un travail défini précédemment ;
   - visualisation à l'écran par le demandeur du résultat prévisible de la définition d'un travail (représentation plane, trois dimensions, « deux dimensions et demi », ou autres) ;
   - impression sur papier chez le demandeur du résultat prévisible de la définition d'un travail ;
   - demande par le demandeur d'échantillons de produits de base ou d'exemples de travaux réalisés ;
- Calcul et présentation d'un devis pour un travail défini précédemment ;
   - calcul et présentation au demandeur du prix correspondant à un travail défini ;
   - calcul et présentation au demandeur du délai de réalisation ou livraison ou disponibilité d'un travail défini ;
   - calcul et présentation au demandeur de possibilités de variation du devis selon les options ou paramètres choisis (dégressifs, délais variables, livraison ou facturation partielles ou périodiques, etc.) ;
   - calcul et présentation au demandeur de particularités tarifaires ou promotionnelles ;
   - calcul et présentation au demandeur de la durée de validité d'un devis présenté ;
   - présentation au demandeur des conditions générales de vente
   - mémorisation du contenu d'un devis ou réutilisation d'un tel devis mémorisé précédemment (localement ou à distance) ;
   - production chez le demandeur de documents présentant les résultats de l'interaction avec le système (impression devis) ;
- Validation d'une commande à partir d'un devis présenté ;
   - sélection par le demandeur d'un devis à valider en tant que commande ;
   - paiement en ligne (directement ou par imputation sur un compte client) ;
   - calcul et présentation au demandeur d'éventuelles limitations en type ou montant de commande (selon état du compte client, solvabilité, montant de travaux déjà en commande, etc.);
   - sélection ou définition par le demandeur de différents paramètres de la commande (options choisies, nom du demandeur, code commande, conditions de règlement, etc.);
   - transfert des informations relatives à un travail commandé au module de gestion de production ;
   - production chez le demandeur de documents présentant les résultats de l'interaction avec le système (impression commande).

Dans un mode de réalisation, un module de Gestion de Production comprend un ou plusieurs agents réalisant au moins une des fonctions de gestion de stocks ou organisation et ordonnancement de la production, ou suivi et gestion du contrôle de la production et du contrôle de la qualité, ou une combinaison de ces fonctions.

Ces agents, en interaction ou non avec un personnel en charge du système ou de la production, peuvent comporter en particulier la réalisation des fonctions de :
- Production de documents utilisés pour l'exploitation du système ;
   - impression d'états de stocks ;
   - impression de commandes en cours chez les fournisseurs ;
   - impression de planning de production ;
   - impression de listes et statistiques de contrôles de qualités
- Gestion de stocks de produits de bases ou consommables ;
   - mise à jour de stocks de produits de bases en fonction des entrées et sorties (matières premières, produits semi-finis, consommables, etc.) ;
   - calcul ou définition de seuils minimum de commande et lancement de procédures d'approvisionnement ;
   - présentation et calcul des stocks (selon quantités, valeur, âge, etc.) ;
   - réservation et imputation de stocks pour les travaux en commande ;
   - gestion d'inventaires de stocks(natures, quantité, valeur, etc.);
- Ordonnancement de la production ;
   - compilation des commandes validées ou à valider par période prédéterminée ;
   - ordonnancement des différents travaux à réaliser selon leurs différents paramètres et des paramètres relatifs à leur fabrication (délais, types de fabrication, types de produits de base, types d'outillages, planning du personnel, etc.) ;
   - lancement de la fabrication des travaux à réaliser ;
   - gestion des travaux en sous-traitance (sélection des tâches ou travaux à sous-traiter, commandes de services aux sous-traitants, suivi de retours des travaux sous-traités) ;
- Suivi de la production ;
   - suivi et mise à jour de l'état d'un travail ;
   - préparation et suivi du contrôle de qualité;
   - préparation des informations et documents de livraison.

Dans un mode de réalisation, un module de Gestion de Fabrication comprend un ou plusieurs agents réalisant au moins une fonction de gestion de fabrication.

Ces agents, en interaction ou non avec un personnel en charge du système ou de la fabrication, peuvent comporter en particulier la réalisation des fonctions de :
- vérification des paramètres techniques des travaux à réaliser (dimensions, compatibilité d'options ou produits, faisabilité en fonction des machines, etc.) ;
- demande d'informations complémentaires à l'intention du donneur d'ordre en cas de vérification insatisfaisante ;
- conversion des données de définition (textes et graphiques) au format utilisé par les logiciels ou machines de fabrication ;
- production de documents utilisés pour l'exploitation du système.

Dans un mode de réalisation, un module de Gestion Commerciale comprend un ou plusieurs agents réalisant au moins une des fonctions de gestion de stocks ou organisation et ordonnancement de la production, ou suivi et gestion du contrôle de la production et du contrôle de la qualité, ou une combinaison de ces fonctions.

Ces agents, en interaction ou non avec un personnel en charge du système ou de l'administratif ou du commercial, peuvent comporter en particulier la réalisation des fonctions de :
- Préparation et production des documents relatifs aux travaux réalisés ;
   - confirmation de commande ;
   - bordereaux de livraison ;
   - bordereaux de reliquats ;
   - factures ;
   - relevés de factures ;
   - ristournes périodiques ;
   - relances de paiement ;
   - valorisation des stocks ;
   - mailings commerciaux ;
- Gestion administrative ;
   - répartition des informations relatifs aux travaux réalisés et statistiques de ventes et production selon les types de travaux, produits de base, ou clients ;
   - et statistiques analytiques de coûts et consommation selon les types de travaux, produits de base, ou clients ;
   - transfert des information de facturation à la comptabilité ;
- Communication, interactive ou non, avec des interlocuteurs externes au système de gestion des travaux (1), ou avec des systèmes utilisés par ces mêmes interlocuteurs.
   - fournisseurs de produits de base ;
   - fournisseurs de services en sous-traitance ;
   - fournisseurs de services complémentaires (livraison, comptabilité, affacturage, etc.) ;
   - autres interlocuteurs administratifs (FISC, TVA, etc.) .

Dans le fonctionnement d'un système de gestion des travaux selon l'invention il faut comprendre que la communication du dit système avec les entités qui lui sont extérieures, dites interlocuteurs extérieurs, peut s'adresser aussi bien à des personnes, qu'à des organisations, ou à des systèmes utilisés par ces personnes ou organisations.

De la même façon, les communications décrites avec des systèmes de fabrication (4) ou des systèmes externes (5) ainsi que la production de documents (10) peuvent comporter aussi bien des interactions ou des documents sous forme papier, que des interactions ou des documents sous forme électronique ou informatique (par exemple protocoles Internet ou normes de communication « Echanges de Documents Informatisés »), sans sortir de l'esprit de l'invention.

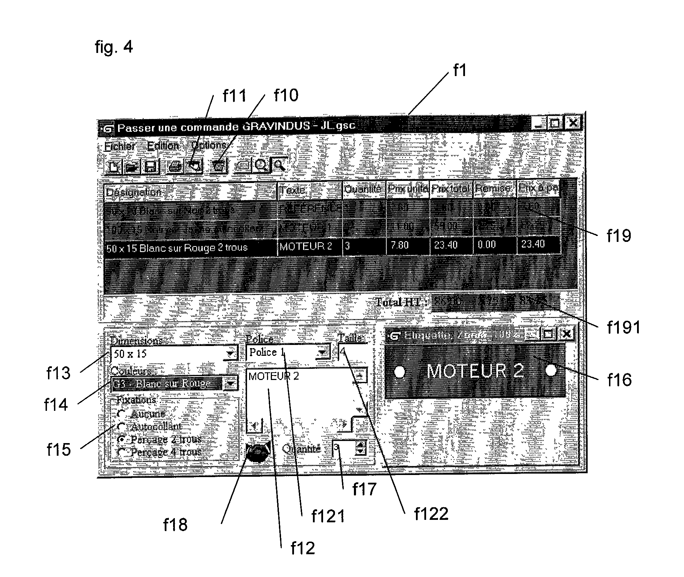

Dans un mode de réalisation représenté en figure 4, le module (13) d'interface client échange avec le demandeur (2) des informations définissant les travaux à réaliser, à travers une fenêtre (f1) logicielle de saisie et de présentation de données. Cette fenêtre (f1) est affichée, par un logiciel standard de consultation de pages Internet, sur un terminal du système (21) du demandeur comportant un écran de visualisation graphique, un clavier de saisie, et un dispositif de pointage comme une souris.

Cette fenêtre (f1) comporte plusieurs objets logiciels de type contrôle, utilisés par les agents du module (13) d'interface client dans le cas d'une demande de travaux de réalisation d'étiquettes gravées, et présentant ou recevant les informations suivantes.

Un contrôle (f12) de type boîte de texte permet la saisie par le demandeur du texte personnalisé à graver sur l'étiquette, en cliquant dans le cadre du contrôle puis en saisissant ce texte au clavier. Ce texte est alors mémorisé par l'agent (134) de définition.

Un contrôle (f121) de type liste déroulante de sélection permet au demandeur de choisir la police de caractère, c'est-à-dire le type de forme de caractères, à utiliser pour le texte à graver. En cliquant sur le triangle situé sur la droite du contrôle, celui-ci affiche une liste des polices disponibles pour le type de travail en cours de définition, éventuellement adaptée par l'agent de définition (134) à partir d'autres choix précédents. Lorsque le demandeur clique sur le nom de la police choisie, le contrôle mémorise ce choix, ferme sur l'écran la liste des polices disponibles, et affiche le seul nom de la police choisie.

Un contrôle (f122) de type boîte de texte permet au demandeur de choisir la taille des caractères dans laquelle sera gravé le texte saisi dans le contrôle (f12) correspondant. Ce texte est alors mémorisé par l'agent (134) de définition.

Un contrôle (f13) de type liste déroulante permet au demandeur de choisir les dimensions de la plaque à utiliser pour réaliser l'étiquette, parmi une liste de dimensions disponibles ou à définir, en catalogue ou en fonction de choix précédents. Ces dimensions sont alors mémorisées par l'agent (134) de définition.

Un contrôle (f14) de type liste déroulante permet au demandeur de choisir les couleurs devant être utilisées pour le texte à graver et pour le reste de l'étiquette à réaliser, parmi une liste de couleurs disponibles, en catalogue ou en fonction de choix précédents. Ces couleurs sont alors mémorisées par l'agent (134) de définition.

Un contrôle (f15) de type choix exclusifs permet au demandeur de choisir un type de fixation devant être prévue pour l'étiquette à réaliser, parmi une liste de types de fixation disponibles, en catalogue ou en fonction de choix précédents. Ce type de fixation est alors mémorisé par l'agent (134) de définition.

Un contrôle (non représenté) permet au demandeur de choisir un matériau à employer parmi les matériaux disponibles pour les dimensions et couleurs choisies. Ce type de matériau est alors mémorisé par l'agent (134) de définition.

Un contrôle (f16) de type sous-fenêtre d'affichage graphique permet au demandeur de visualiser l'aspect prévu de l'étiquette défini dans le reste de la fenêtre (f1). Cet aspect est calculé et affiché par l'agent (135) de présentation en fonction des informations affichées par défaut ou saisies à la suite de choix effectués dans les autres contrôles de la fenêtre (f1), en combinaison avec des informations prédéfinies lues dans les moyens de mémorisation du système (1) de gestion de travaux.

Un contrôle (f17) de type boîte de texte incrémentable permet au demandeur de choisir la quantité d'étiquettes à réaliser avec les informations affichées par défaut ou saisies à la suite de choix effectués dans les autres contrôles de la fenêtre (f1). La quantité peut être saisie au clavier après avoir cliqué dans le cadre du contrôle, ou être incrémentée ou décrémentée d'une valeur prédéfinie en cliquant sur l'un des triangles affichés sur la droite du contrôle. Cette quantité est alors mémorisée par l'agent (134) de définition.

Un contrôle (f18) de type bouton à cliquer permet au demandeur de valider la définition et de lancer le calcul d'un devis, par l'agent (136) de devis, pour un travail défini par les informations affichées par défaut ou saisies à la suite de choix effectués dans les autres contrôles de la fenêtre (f1). Ce devis est alors mémorisé par l'agent (136) de devis.

Dans un contrôle (f19) de type cadre affichage, une ou plusieurs lignes de texte sont affichées par l'agent (136) de devis, présentant pour chaque ligne le résumé des paramètres et prix d'un travail défini et validé précédemment. Un total des montants devisés dans les différentes lignes est affiché par l'agent (136) de devis dans un contrôle (f191) de type boîte d'affichage de texte.

Après qu'il ait sélectionné par clics une ou plusieurs ligne de devis dans contrôle (f19) correspondant, un contrôle (f10) de type bouton à cliquer permet au demandeur d'effacer ces lignes de devis.

Après qu'il ait sélectionné, en cliquant dessus, une ou plusieurs ligne de devis dans contrôle (f19) correspondant, un contrôle (f11) de type bouton à cliquer permet au demandeur de valider la transformation de ces lignes de devis en commande ferme pour la réalisation des travaux définis par ces lignes de devis. Ces lignes de devis sont alors transformées en commandes et mémorisées par l'agent (137) de commande.

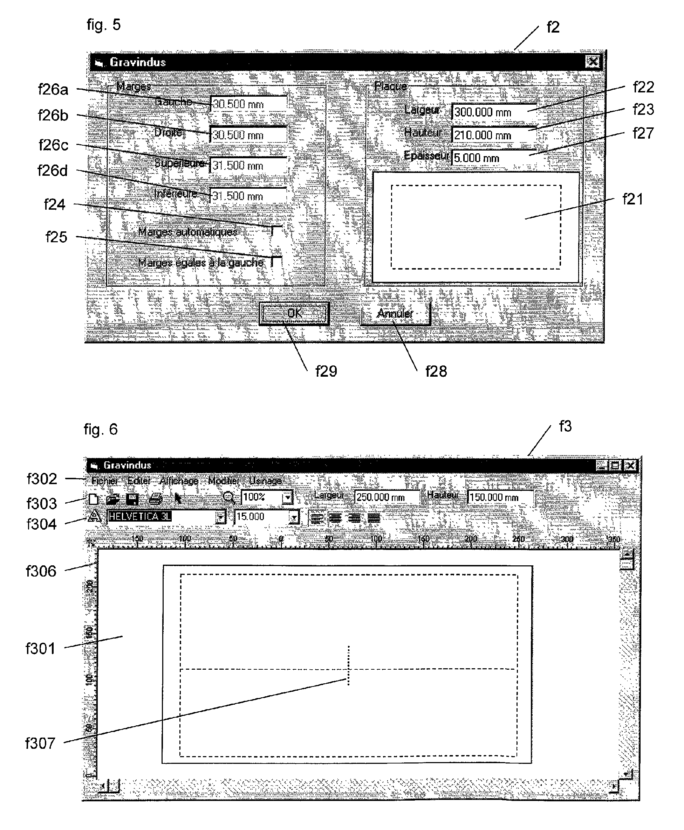

Dans un mode de réalisation représenté en figure 5, le module (13) d'interface client échange avec le demandeur (2) des informations définissant des dimensions et marges d'un support d'étiquette devant recevoir un texte, à travers une fenêtre (f2) logicielle de saisie et de présentation de données. Cette fenêtre (f2) est affichée, par un logiciel standard de consultation de pages Internet, sur un terminal du système (21) du demandeur comportant un écran de visualisation graphique, un clavier de saisie, et un dispositif de pointage comme une souris.

Cette fenêtre (f2) comporte plusieurs objets logiciels de type contrôle, utilisés par les agents du module (13) d'interface client pour définir les dimensions et marges d'un support personnalisé devant recevoir un texte, pour la réalisation de travaux d'étiquettes gravées. Cette fenêtre (2) est utilisée par exemple lorsque le demandeur a choisi de définir lui-même les dimensions de l'étiquette à réaliser, et présente ou reçoit dans ce but les informations suivantes.

Un contrôle (f21) de type représentation graphique indique au demandeur à quel côté du support correspondent les paramètres à saisir dans la fenêtre (f2) et représente les dimensions définies pour le support et les dimensions définies pour les marges à l'intérieur desquelles devra s'inscrire le texte à graver.

Un contrôle (f22) de type boîte de texte permet la saisie par le demandeur de la largeur du support à définir, en cliquant dans le cadre du contrôle puis en saisissant au clavier la valeur de cette largeur. Cette valeur est alors mémorisée par l'agent (134) de définition.

Un contrôle (f23) de type boîte de texte permet la saisie par le demandeur de la hauteur du support à définir, en cliquant dans le cadre du contrôle puis en saisissant au clavier la valeur de cette hauteur. Cette valeur est alors mémorisée par l'agent (134) de définition.

Un contrôle (f24) de type case à cocher permet au demandeur de définir s'il souhaite définir lui-même la valeur des marges, en cliquant sur la case représentée pour cocher ou décocher successivement cette case.

Un contrôle (f25) de type case à cocher permet au demandeur de définir s'il souhaite que la valeur des marges soit uniforme sur les quatre côtés de l'étiquette.

Lorsque le contrôle (f24) de marges automatiques n'est pas coché, quatre contrôles (f26a, f26b, f26c, f26d) de type boîte de texte permettent la saisie par le demandeur de la valeur de la marge à définir respectivement pour les quatre côtés de l'étiquette, en cliquant dans le cadre du contrôle puis en saisissant au clavier la valeur de cette hauteur. Cette valeur est alors mémorisée par l'agent (134) de définition. Lorsque le contrôle (f25) de marges uniformes est coché, seul un des quatre contrôles (f26a, f26b, f26c, f26d) de valeur de marges est actif, et la valeur qu'il contient est utilisée pour les trois autres côtés.

Un contrôle (f27) de type liste déroulante de sélection permet le choix par le demandeur de l'épaisseur du support à définir, en cliquant dans le cadre du contrôle puis en sélectionnant à la souris la valeur de cette épaisseur. Cette valeur est alors mémorisée par l'agent (134) de définition.

Un contrôle (f28) de type bouton à cliquer permet au demandeur d'annuler la définition des paramètres définis dans le reste de la fenêtre (f2) et de fermer cette même fenêtre.

Un contrôle (f29) de type bouton à cliquer permet au demandeur de valider la définition d'un support à partir des paramètres affichés dans le reste de la fenêtre (f2) et de fermer cette même fenêtre.

Dans un mode de réalisation représenté en figure 6, le module (13) d'interface client échange avec le demandeur (2) des informations définissant les travaux à réaliser, à travers une fenêtre (f3) logicielle de saisie et de présentation de données. Cette fenêtre (f3) est affichée, par un logiciel standard de consultation de pages Internet, sur un terminal du système (21) du demandeur comportant un écran de visualisation graphique, un clavier de saisie, et un dispositif de pointage comme une souris.

Cette fenêtre (f3) comporte au moins une zone d'affichage (f301) ainsi que plusieurs objets logiciels de type contrôle ou groupes de contrôles, utilisés par l'agent (134) de définition du module (13) d'interface client pour définir et positionner un texte et des dessins personnalisés à marquer ou imprimer sur un panneau signalétique dont le demandeur souhaite commander la réalisation par accès au système (1) de gestion de travaux.

La zone d'affichage (f301) est utilisée par l'agent (134) de définition pour représenter les différents éléments textuels et graphiques définis par le demandeur, dans un aspect et une disposition liés aux informations définissant ces différents éléments.

Une barre de menus (f302) est utilisable par le demandeur pour accéder à différentes commandes d'interaction avec l'agent (134) de définition, et comporte en particulier une disposition et des commandes de bases communes à une grande part des logiciels utilisés avec un ou plusieurs systèmes d'exploitations standards, ce qui permet une utilisation intuitive et accessible sans formation spécifique. Un bandeau (f303) d'icônes à cliquer permet au demandeur un accès direct à certaines des dites commandes d'interaction avec l'agent (134) de définition.

Une commande de sauvegarde de fichier et une commande d'ouverture de fichier permettent par exemple respectivement de mémoriser les textes et dessins définis dans la fenêtre (f3) et de réutiliser dans cette même fenêtre (f3) des textes et dessins précédemment mémorisés. Cette mémorisation peut se faire dans le système (21) du demandeur (2) ou dans les moyens de mémorisation (12) du système de gestion des travaux (1).

Un bandeau (f304) de contrôles permet au demandeur de visualiser ou modifier certains paramètres relatifs aux éléments de texte ou dessin définis dans la fenêtre. Ces contrôles comprennent les fonctions de choix de la police de caractère, position d'un élément à parti de la gauche ou du bas, taille des éléments de texte, accès à une commande de gestion des couleurs, réglage du mode d'alignement d'un élément de texte.

Une barre (non représentée) d'icônes à cliquer permet au demandeur de sélectionner un outil logiciel à utiliser lors de la suite de ses actions. Ces outils comprennent les fonctions de sélection d'objet, insertion de texte, modification d'objet, dessin ajustable de formes graphiques de types déterminés, variation de l'échelle d'affichage des éléments définis.

Deux règles graduées verticales et horizontales (f306) présentent l'échelle d'affichage dans la zone d'affichage (f301) des éléments définis dans la fenêtre (f3).

Un curseur (f307) représente par un motif graphique dépendant du type d'action en cours ou de l'outil logiciel sélectionné représente dans la zone d'affichage (f301) l'emplacement ou l'élément où s'appliquera la prochaine action demandée à l'agent (134) de définition s'il s'agit d'une action relative aux éléments de texte et dessin représentés dans cette zone d'affichage (f301).

Du fait que les travaux à réaliser sont définis par le donneur d'ordres lui-même et seulement par lui, tout risque d'erreur humaine ultérieure lors de la transmission de ces informations est supprimé tout au long de la chaîne. Cette transmission entièrement numérique permet ainsi un gain de temps en évitant toute resaisie de ces informations, et assure donc également une fiabilité accrue en supprimant une cause majeure d'erreur dans de tels travaux à la fois nombreux et variés.

De plus, l'interface utilisée par le système pour interagir avec le donneur d'ordres pouvant fonctionner sans intervention humaine au sein du dit système (1), il est possible à un donneur d'ordres de se connecter sur le système de gestion des travaux au moment même où il en a besoin et autant qu'il le veut, sans mobiliser de personnel chez le prestataire.

En raison de l'utilisation de méthodes de communication standards, cette connexion se fait à partir de l'équipement et des logiciels standards dont disposent déjà un grand nombre de personnes. Il est donc possible à un grand nombre de donneurs d'ordres potentiels de consulter les catalogues, demander des devis, ou passer une commande sans nécessiter de réflexion ni préparation préalable.

Il est ainsi possible au prestataire d'être présent immédiatement et en permanence dans tous les foyers et tous les services des entreprises ou administrations déjà raccordés à l'Internet. Dans le cas d'entreprises ou administrations importantes disposant d'un réseau intranet, qu'il soit local ou multi-sites, la même présence lui sera assurée s'il est lui-même raccordé à ce réseau, soit directement soit à distance après négociation avec les services qui gèrent ce réseau.

Une telle compatibilité « a priori » offre donc des opportunités commerciales importantes sans investissement particulier en locaux de présentation ou lieux de chalandise, ni coûts importants d'enlèvement des commandes chez le client, tout en maintenant ou améliorant les délais et la fiabilité des travaux.

Un système tel que décrit ci-dessus doit une part de ses caractéristiques à l'aspect sur mesure des travaux commandés, et peut de ce fait être utilisé dans un grand nombre de domaine ou les travaux ou objets commandés peuvent présenter des caractéristiques définies par rapport à des besoins spécifiques au demandeur.

L'invention propose ainsi un système informatique (1) de traitement de données de gestion de travaux à la demande de personnalisation d'objets signalétiques ou réalisation personnalisée d'objets signalétiques comportant un marquage ou une découpe, ces travaux étant définis ou paramétrés par un demandeur (2), c'est-à-dire un donneur d'ordres ou un client ou un logiciel géré par lui, ce système étant caractérisé en ce qu'il comporte des moyens de communication réalisant des échanges d'informations, pour définir les dits travaux, avec un système informatique (21) standard de traitement de données utilisé par le donneur d'ordres, ces échanges d'informations se faisant par communication à travers un ou plusieurs réseaux (3) d'échanges de données et étant basés en tout ou partie sur un ou plusieurs protocoles standards d'échange de données alphanumériques et graphiques.

Selon une particularité, les travaux réalisés consistent en une gravure personnalisée de plaques, panneaux, étiquettes ou objets en volume.

Selon une particularité, les travaux réalisés consistent en une découpe personnalisée de motifs, lettres, textes ou dessins ou une combinaison de ces éléments, dans un matériau présenté sous forme de plaques ou feuilles d'une épaisseur déterminée.

Selon une particularité, les travaux réalisés consistent en la réalisation personnalisée de tampons par gravure de la surface d'une pièce en un matériau élastique.

Selon une particularité, les travaux réalisés consistent en une impression personnalisée de « travaux de ville » ou tous documents imprimés, en couleur ou non.

Selon une particularité, les travaux réalisés consistent en un marquage personnalisé d'objets non plans.

Selon une particularité, les moyens de communication (11) utilisés pour l'échange d'informations relatives à la personnalisation des travaux comportent l'utilisation du réseau Internet (31).

Selon une particularité, les moyens de communication utilisés pour l'échange d'informations relatives à la personnalisation des travaux comportent l'utilisation d'un réseau (32) de type intranet.

Selon une particularité, les moyens de communication utilisés pour l'échange d'informations relatives à la personnalisation des travaux comportent l'utilisation d'un langage standard de présentation d'informations textuelles et graphiques exploitable par une grande part des systèmes de traitement de données connectables à un réseau de type intranet ou au réseau Internet.

Selon une particularité, les moyens de communication utilisés pour l'échange d'informations relatives à la personnalisation des travaux comportent l'utilisation d'un langage de type HTML ou XML.

Selon une particularité, le système comprend des moyens de mémorisation (12) mémorisant en un ou plusieurs fichiers des informations relatives aux types de travaux réalisables et produits de base disponibles, c'est-à-dire objets ou matières à utiliser pour réaliser ces travaux, ces informations comportant les types de travaux réalisables, ou contraintes spécifiques aux différents types de travaux, ou types de matériaux disponibles, ou caractéristiques dimensionnelles disponibles, ou couleurs disponibles, ou délais d'approvisionnement, ou bibliothèques de symboles et caractères disponibles, ou quantités disponibles, ou une combinaison de ces éléments.

Selon une particularité, le système comprend des moyens de mémorisation (12) mémorisant en un ou plusieurs fichiers des informations relatives aux différents travaux en cours, c'est-à-dire la définition ou les paramètres d'un travail définis lors d'une autre étape, ou l'état de réalisation d'un travail, ou le prix d'un travail, ou le délai d'un travail, ou une combinaison de ces différents éléments.

Selon une particularité, le système comprend des moyens de mémorisation (12) mémorisant en un ou plusieurs fichiers des informations relatives aux différents demandeurs ou clients, ou aux tarifs applicables à ces demandeurs ou clients, ou aux tarifs applicables aux différents produits de base, ou aux différents travaux réalisés ou à réaliser pour un demandeur ou client, ou à un état des paiements dus ou effectués par un demandeur ou client, ou une combinaison de ces éléments.

Selon une particularité, le système comporte au moins un module comprenant des agents réalisant au moins une des fonctions suivantes :
- interface avec le demandeur ou client et prise en compte de ses demandes, par interaction du demandeur avec un ou plusieurs agents d'interface client (13) interagissant avec tout ou partie des données mémorisées par le système ;
- gestion ou suivi de la production ou des opérations post-production par un ou des agents de gestion de production (14) interagissant avec tout ou partie des données mémorisées par le système ;
- vérification des paramètres des travaux à réaliser en fonction des contraintes techniques propres à leur réalisation, ou demande de complément d'information, ou conversion des paramètres de ces travaux en données utilisables par le ou les systèmes (4) concourrant à la fabrication, ou interface avec le personnel ou système de fabrication, ou une combinaison de ces éléments, par un ou plusieurs agents de gestion de fabrication (15) interagissant avec tout ou partie des informations mémorisées par le système ;
- gestion dite commerciale des tâches documentaires ou administratives relatives aux travaux réalisés ou à réaliser, ou interface avec un ou des systèmes de gestion de ces tâches par un ou des agents de gestion commerciale (16) interagissant avec tout ou partie des données mémorisées par le système.

Selon une particularité, le ou les modules d'interface client (13) comprennent au moins un agent réalisant au moins une des fonctions de :
- accueil d'un demandeur ou client, ou information commerciale ou publicitaire, ou information tarifaire, ou suivi de commandes ou travaux en cours, ou gestion d'un compte client, lors de la connexion au système du demandeur ou client ou à tout moment au cours de sa connexion, par interaction du demandeur avec un ou plusieurs agents d'accueil interagissant avec tout ou partie des données mémorisées par le système ;
- identification sécurisée du demandeur ou client par interaction du demandeur avec un ou plusieurs agents d'identification interagissant avec tout ou partie des données mémorisées par le système, en utilisant des moyens connus ;
- présentation au demandeur ou client de listes ou aspects des produits de base ou symboles ou dessins disponibles, ou possibilités disponibles pour la réalisation de travaux, ou une combinaison de ces éléments, par interaction du demandeur avec un ou plusieurs agents de présentation interagissant avec tout ou partie des informations mémorisées par le système ;
- sélection et présentation au demandeur ou client de un ou plusieurs seconds paramètres compatibles avec un premier paramètre choisi par le demandeur ou client pour le ou les travaux à réaliser, par interaction du demandeur avec un ou plusieurs agents de sélection interagissant avec tout ou partie des informations mémorisées par le système ;
- transfert ou conversion de données informatiques provenant du demandeur ou client dans les informations relatives à un ou plusieurs travaux, par interaction du demandeur avec un ou plusieurs agents de transfert de données interagissant avec tout ou partie des données mémorisées par le système ;
- définition et mémorisation des informations relatives à un travail et aux différents paramètres nécessaires à la réalisation d'un travail, par interaction du demandeur avec un ou plusieurs agents de définition de travaux interagissant avec tout ou partie des données mémorisées par le système ;
- réalisation et présentation au demandeur ou client, d'un devis de délai, coût, ou disponibilité, en fonction des travaux définis par le demandeur ou client, des produits de base et autres paramètres à utiliser pour ces travaux, des informations tarifaires mémorisées, des informations relatives à ce demandeur ou client, ou une combinaison de ces éléments, par interaction du demandeur avec un ou plusieurs agents de devis interagissant avec tout ou partie des informations mémorisées par le système ;
- présentation au demandeur ou client de l'aspect prévisible du résultat d'un ou plusieurs travaux tels que définis par lui, par interaction du demandeur avec un ou plusieurs agents de présentation de rendu, interagissant avec tout ou partie des informations mémorisées par le système ;
- validation en tant que commande ferme de un ou plusieurs travaux précédemment définis par le demandeur ou client, par interaction du demandeur avec un ou plusieurs agents de prise de commande interagissant;
- réalisation d'un paiement ou d'une transaction financière en ligne, par interaction du demandeur avec un ou plusieurs agents de paiement interagissant avec tout ou partie des informations mémorisées par le système, en utilisant des moyens connus.

Selon une particularité, le ou les modules de gestion de production (14) comprennent au moins un agent réalisant au moins une des fonctions de :
- re-calcul, ou mise à jour, ou demande de réapprovisionnement, ou une combinaison de ces éléments, pour les différents stocks de produits de base ou consommables, en fonction de la nature et des paramètres des travaux à réaliser, par un ou plusieurs agents de gestion de stocks interagissant avec tout ou partie des informations mémorisées par le système ;
- réunion, combinaison, organisation ou ordonnancement des travaux à réaliser, ou une combinaison de ces éléments, en fonction des différents paramètres des travaux, ou de contraintes supplémentaires prédéfinies, par un ou plusieurs agents d'ordonnancement interagissant avec tout ou partie des informations mémorisées par le système ;
- recensement, ou compte rendu de fabrication, ou présentation des informations nécessaires au contrôle qualité, ou préparation des informations ou documents de livraison, ou une combinaison de ces éléments pour les travaux réalisés ou à réaliser, par un ou plusieurs agents de suivi de production interagissant avec tout ou partie des informations mémorisées par le système ;
- interface avec le personnel en charge du suivi et de la gestion de production et production des documents correspondants, par interaction de ce personnel avec un ou plusieurs agents d'interface de production interagissant avec tout ou partie des informations mémorisées par le système.

Selon une particularité, le ou les modules de gestion commerciale (16) comprennent au moins un agent réalisant au moins une des fonctions de :
- interface avec le personnel en charge du suivi et de la gestion commerciale ou administrative et production des documents correspondants, par interaction de ce personnel avec un ou plusieurs agents d'interface administrative interagissant avec tout ou partie des informations mémorisées par le système.
- production de différents documents (10) commerciaux ou administratifs relatifs aux travaux gérés, sous forme papier ou électronique, par un ou plusieurs agents commerciaux interagissant avec tout ou partie des informations mémorisées par le système ;
- communication avec un ou plusieurs systèmes (5) extérieurs au système (1) par documents papiers ou électroniques, pour la gestion de commandes d'approvisionnement de produits de base, ou de travaux en sous-traitance, ou de services complémentaires relatifs aux travaux, ou de traitements comptables ou financiers, ou une combinaison de ces éléments, par un ou plusieurs agents de liaison externe interagissant avec tout ou partie des informations mémorisées par le système.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système informatique (1) de traitement de données de gestion de travaux à la demande de personnalisation d'objets signalétiques ou réalisation personnalisée d'objets signalétiques comportant un marquage ou une découpe, ces travaux étant définis ou paramétrés par un demandeur (2), c'est-à-dire un donneur d'ordres ou un client ou un logiciel géré par lui, ce système étant **caractérisé en ce qu'**il comporte des moyens de communication réalisant des échanges d'informations, pour définir les dits travaux, avec un système informatique (21) standard de traitement de données utilisé par le donneur d'ordres, ces échanges d'informations se faisant par communication à travers un ou plusieurs réseaux (3) d'échanges de données et étant basés en tout ou partie sur un ou plusieurs protocoles standards d'échange de données alphanumériques et graphiques.

2. Système de traitement de données selon la revendication 1, **caractérisé en ce que** les travaux réalisés consistent en une gravure personnalisée de plaques, panneaux, étiquettes ou objets en volume.

3. Système de traitement de données selon l'une des revendications 1 à 2, **caractérisé en ce que** les travaux réalisés consistent en une découpe personnalisée de motifs, lettres, textes ou dessins ou une combinaison de ces éléments, dans un matériau présenté sous forme de plaques ou feuilles d'une épaisseur déterminée.

4. Système de traitement de données selon l'une des revendications 1 à 3, **caractérisé en ce que** les travaux réalisés consistent en la réalisation personnalisée de tampons par gravure de la surface d'une pièce en un matériau élastique.

5. Système de traitement de données selon l'une des revendications 1 à 4, **caractérisé en ce que** les travaux réalisés consistent en une impression personnalisée de « travaux de ville » ou tous documents imprimés, en couleur ou non.

6. Système de traitement de données selon l'une des revendications 1 à 5, **caractérisé en ce que** les travaux réalisés consistent en un marquage personnalisé d'objets non plans.

7. Système de traitement de données selon l'une des revendications 1 à 6, **caractérisé en ce que** les moyens de communication (11) utilisés pour l'échange d'informations relatives à la personnalisation des travaux comportent l'utilisation du réseau Internet (31).

8. Système de traitement de données selon l'une des revendications 1 à 7, **caractérisé en ce que** les moyens de communication utilisés pour l'échange d'informations relatives à la personnalisation des travaux comportent l'utilisation d'un réseau (32) de type intranet.

9. Système de traitement de données selon l'une des revendications 1 à 8, **caractérisé en ce que** les moyens de communication utilisés pour l'échange d'informations relatives à la personnalisation des travaux comportent l'utilisation d'un langage standard de présentation d'informations textuelles et graphiques exploitable par une grande part des systèmes de traitement de données connectables à un réseau de type intranet ou au réseau Internet.

10. Système de traitement de données selon l'une des revendications 1 à 9, **caractérisé en ce que** les moyens de communication utilisés pour l'échange d'informations relatives à la personnalisation des travaux comportent l'utilisation d'un langage de type HTML ou XML.

11. Système de traitement de données selon l'une des revendications 1 à 10, **caractérisé en ce qu'**il comprend des moyens de mémorisation (12) mémorisant en un ou plusieurs fichiers des informations relatives aux types de travaux réalisables et produits de base disponibles, c'est-à-dire objets ou matières à utiliser pour réaliser ces travaux, ces informations comportant les types de travaux réalisables, ou contraintes spécifiques aux différents types de travaux, ou types de matériaux disponibles, ou caractéristiques dimensionnelles disponibles, ou couleurs disponibles, ou délais d'approvisionnement, ou bibliothèques de symboles et caractères disponibles, ou quantités disponibles, ou une combinaison de ces éléments.

12. Système de traitement de données selon l'une des revendications 1 à 11, **caractérisé en ce qu'**il comprend des moyens de mémorisation (12) mémorisant en un ou plusieurs fichiers des informations relatives aux différents travaux en cours, c'est-à-dire la définition ou les paramètres d'un travail définis lors d'une autre étape, ou l'état de réalisation d'un travail, ou le prix d'un travail, ou le délai d'un travail, ou une combinaison de ces différents éléments.

13. Système de traitement de données selon l'une des revendications 1 à 12, **caractérisé en ce qu'**il comprend des moyens de mémorisation (12) mémorisant en un ou plusieurs fichiers des informations relatives aux différents demandeurs ou clients, ou aux tarifs applicables à ces demandeurs ou clients, ou aux tarifs applicables aux différents produits de base, ou aux différents travaux réalisés ou à réaliser pour un demandeur ou client, ou à un état des paiements dus ou effectués par un demandeur ou client, ou une combinaison de ces éléments.

14. Système selon l'une des revendications 1 à 13, **caractérisé en ce qu'**il comporte au moins un module comprenant des agents réalisant au moins une des fonctions suivantes :
- interface avec le demandeur ou client et prise en compte de ses demandes, par interaction du demandeur avec un ou plusieurs agents d'interface client (13) interagissant avec tout ou partie des données mémorisées par le système ;
- gestion ou suivi de la production ou des opérations post-production par un ou des agents de gestion de production (14) interagissant avec tout ou partie des données mémorisées par le système ;
- vérification des paramètres des travaux à réaliser en fonction des contraintes techniques propres à leur réalisation, ou demande de complément d'information, ou conversion des paramètres de ces travaux en données utilisables par le ou les systèmes (4) concourrant à la fabrication, ou interface avec le personnel ou système de fabrication, ou une combinaison de ces éléments, par un ou plusieurs agents de gestion de fabrication (15) interagissant avec tout ou partie des informations mémorisées par le système ;
- gestion dite commerciale des tâches documentaires ou administratives relatives aux travaux réalisés ou à réaliser, ou interface avec un ou des systèmes de gestion de ces tâches par un ou des agents de gestion commerciale (16) interagissant avec tout ou partie des données mémorisées par le système.

15. Système selon l'une des revendications 1 à 14, **caractérisé en ce que** le ou les modules d'interface client (13) comprennent au moins un agent réalisant au moins une des fonctions de :
- accueil d'un demandeur ou client, ou information commerciale ou publicitaire, ou information tarifaire, ou suivi de commandes ou travaux en cours, ou gestion d'un compte client, lors de la connexion au système du demandeur ou client ou à tout moment au cours de sa connexion, par interaction du demandeur avec un ou plusieurs agents d'accueil interagissant avec tout ou partie des données mémorisées par le système ;
- identification sécurisée du demandeur ou client par interaction du demandeur avec un ou plusieurs agents d'identification interagissant avec tout ou partie des données mémorisées par le système, en utilisant des moyens connus ;
- présentation au demandeur ou client de listes ou aspects des produits de base ou symboles ou dessins disponibles, ou possibilités disponibles pour la réalisation de travaux, ou une combinaison de ces éléments, par interaction du demandeur avec un ou plusieurs agents de présentation interagissant avec tout ou partie des informations mémorisées par le système ;
- sélection et présentation au demandeur ou client de un ou plusieurs seconds paramètres compatibles avec un premier paramètre choisi par le demandeur ou client pour le ou les travaux à réaliser, par interaction du demandeur avec un ou plusieurs agents de sélection interagissant avec tout ou partie des informations mémorisées par le système ;
- transfert ou conversion de données informatiques provenant du demandeur ou client dans les informations relatives à un ou plusieurs travaux, par interaction du demandeur avec un ou plusieurs agents de transfert de données interagissant avec tout ou partie des données mémorisées par le système ;
- définition et mémorisation des informations relatives à un travail et aux différents paramètres nécessaires à la réalisation d'un travail, par interaction du demandeur avec un ou plusieurs agents de définition de travaux interagissant avec tout ou partie des données mémorisées par le système ;
- réalisation et présentation au demandeur ou client, d'un devis de délai, coût, ou disponibilité, en fonction des travaux définis par le demandeur ou client, des produits de base et autres paramètres à utiliser pour ces travaux, des informations tarifaires mémorisées, des informations relatives à ce demandeur ou client, ou une combinaison de ces éléments, par interaction du demandeur avec un ou plusieurs agents de devis interagissant avec tout ou partie des informations mémorisées par le système ;
- présentation au demandeur ou client de l'aspect prévisible du résultat d'un ou plusieurs travaux tels que définis par lui, par interaction du demandeur avec un ou plusieurs agents de présentation de rendu, interagissant avec tout ou partie des informations mémorisées par le système ;
- validation en tant que commande ferme de un ou plusieurs travaux précédemment définis par le demandeur ou client, par interaction du demandeur avec un ou plusieurs agents de prise de commande interagissant;
- réalisation d'un paiement ou d'une transaction financière en ligne, par interaction du demandeur avec un ou plusieurs agents de paiement interagissant avec tout ou partie des informations mémorisées par le système, en utilisant des moyens connus.

16. Système selon l'une des revendications 1 à 14, **caractérisé en ce que** le ou les modules de gestion de production (14) comprennent au moins un agent réalisant au moins une des fonctions de :
- re-calcul, ou mise à jour, ou demande de réapprovisionnement, ou une combinaison de ces éléments, pour les différents stocks de produits de base ou consommables, en fonction de la nature et des paramètres des travaux à réaliser, par un ou plusieurs agents de gestion de stocks interagissant avec tout ou partie des informations mémorisées par le système ;
- réunion, combinaison, organisation ou ordonnancement des travaux à réaliser, ou une combinaison de ces éléments, en fonction des différents paramètres des travaux, ou de contraintes supplémentaires prédéfinies, par un ou plusieurs agents d'ordonnancement interagissant avec tout ou partie des informations mémorisées par le système ;
- recensement, ou compte rendu de fabrication, ou présentation des informations nécessaires au contrôle qualité, ou préparation des informations ou documents de livraison, ou une combinaison de ces éléments pour les travaux réalisés ou à réaliser, par un ou plusieurs agents de suivi de production interagissant avec tout ou partie des informations mémorisées par le système ;
- interface avec le personnel en charge du suivi et de la gestion de production et production des documents correspondants, par interaction de ce personnel avec un ou plusieurs agents d'interface de production interagissant avec tout ou partie des informations mémorisées par le système.

17. Système selon l'une des revendications 1 à 14, **caractérisé en ce que** le ou les modules de gestion commerciale (16) comprennent au moins un agent réalisant au moins une des fonctions de :
- interface avec le personnel en charge du suivi et de la gestion commerciale ou administrative et production des documents correspondants, par interaction de ce personnel avec un ou plusieurs agents d'interface administrative interagissant avec tout ou partie des informations mémorisées par le système.
- production de différents documents (10) commerciaux ou administratifs relatifs aux travaux gérés, sous forme papier ou électronique, par un ou plusieurs agents commerciaux interagissant avec tout ou partie des informations mémorisées par le système ;
- communication avec un ou plusieurs systèmes (5) extérieurs au système (1) par documents papiers ou électroniques, pour la gestion de commandes d'approvisionnement de produits de base, ou de travaux en sous-traitance, ou de services complémentaires relatifs aux travaux, ou de traitements comptables ou financiers, ou une combinaison de ces éléments, par un ou plusieurs agents de liaison externe interagissant avec tout ou partie des informations mémorisées par le système.
